# EUROPEAN PATENT APPLICATION

(11) **EP 2 306 563 A1**
(43) Date of publication of application: **06.04.2011**
(21) Application number: 09797982.7
(22) Date of filing: 16.07.2009
(51) Int. Cl.: H01M 4/62, H01M 4/02, H01M 4/48

(54) **ANODE COMPOSITE FOR NONAQUEOUS ELECTROLYTE CELL**

(30) Priority: 17.07.2008 JP 2008185944
(71) Applicant: Asahi Glass Company Limited, Chiyoda-ku Tokyo 100-8405 (JP)
(72) Inventor: YAMADA, Ryoji, Tokyo 100-8405 (JP)
(74) Representative: Müller-Boré & Partner Patentanwälte
(86) International application number: PCT/JP2009/062917
(87) International publication number: WO 2010/008058

(57) **Abstract**

To provide an anode composite for a nonaqueous electrolyte secondary cell, whereby the properties of the material constituting an electrode can be fully obtained.

An anode composite for a nonaqueous electrolyte secondary cell, which comprises an electrode active material having a lithium intercalation-deintercalation potential higher by at least 0.4 V than the standard electrode potential of Li/Li⁺, and a binder containing a fibrillated polytetrafluoroethylene and an amorphous resin.

## Description

### TECHNICAL FIELD

The present invention relates to an anode composite for a nonaqueous electrolyte secondary cell, which works as an anode excellent in safety, and a nonaqueous electrolyte secondary cell which has the anode.

### BACKGROUND ART

Nonaqueous electrolyte secondary cells represented by lithium ion cells have been known as small size energy sources for mobile instruments, and conventional alkali secondary cells and nickel-hydrogen cells have been quickly replaced by the nonaqueous electrolyte secondary cells. On the other hand, it is desired to develop medium size or large size lithium ion cells for charge and discharge systems for automobiles, energy sources or electric power storage systems as one of answers capable of reducing environmental problems and energy problems which are getting worse. However, since anxiety about safety has not been solved, such development does not progress.

The anxiety about safety which hinders a larger size of lithium ion cells is thermal runaway caused by an exothermic reaction between a conventional graphite anode and an electrolyte. However, it has been found that this thermal runaway can be prevented by employing a lithium-titanium composite oxide as an anode. Hereinafter, the lithium-titanium composite oxide is referred to as "LTO". As mentioned below, a plurality of compounds different in composition have been known as LTO, and all of such compounds are generally referred to as "LTO".

It is already known to employ LTO as an anode for lithium secondary cells (Patent Document 1). However, since a lithium intercalation-deintercalation potential of LTO is much higher than the standard electrode potential of Li/Li⁺, it has been considered that it is difficult to use LTO as a power source for mobile instruments which requires high energy density. However, this high operating potential considered to be disadvantageous is expected to improve safety and a cyclic property of cells remarkably and realize developing of large size cells which are highly safe and have long service life. Further, since the safety is extremely high, it is possible to increase reactivity of an electrode by forming electrode active material particles into fine particles, and such a characteristic is preferred for cells for hybrid electric vehicles in which quick and large capacity-charge and discharge properties are required (Patent Document 2).

As LTO, various compositions have been known, and all of such LTO have voids in the interior (Patent Document 3). It has been proposed to realize a broad interface charge transfer reaction field which relates to cell properties by utilizing these voids to form ion path and forming particles into more fine particles. Such cells have enough properties required for large cells for automobiles, and have high safety and a long stable service life (Patent Document 4).

Thus, basic properties of cells depend on the performance of electrode active materials which has the main role in cell properties. However, it is also extremely important to conduct a study to realize a cell structure, particularly a structure of the electrode composite, for fully obtaining properties of the main material. From such a viewpoint, in prior arts, properties of LTO anode were not fully utilized.

A binder is contained in an electrode composite. A binder for electrodes of lithium ion cells is required to have high resistance to oxidative decomposition for cathodes and required to have high resistance to reductive decomposition for anodes. Heretofore, as the binder for cathodes, a polytetrafluoroethylene (hereinafter referred to as "PTFE"), a polyvinylidene fluoride (hereinafter referred to as "PVdF") or the like has been used. As the binder for anodes, PVdF, styrene butadiene rubber (hereinafter referred to as "SBR") or the like has been used.

In Patent Document 4, a solution of PVdF in 1-methyl-2-pyrolidone (hereinafter referred to as "NMP") is used for forming an anode composite containing LTO. This feature of Patent Document 4 is in accordance with conventional knowledge of binders.

However, it is known that the binding capacity of PVdF is weak, and particularly in a case where PVdF is used for binding fine particles, the weak binding capacity is remarkable. As a method for solving such a problem, the amount of PVdF may be increased, however, if the amount of PVdF is increased, cell properties are impaired. Therefore, such a method cannot be employed. Further, since PVdF is used in the form of a solution in NMP, PVdF causes problems such that voids are clogged, or a surface of electrode active materials is covered, and an electrochemical active surface is shielded. Particularly, in a case of electrode active materials in the form of fine particles, the capacity is remarkably lowered, or load characteristics are remarkably impaired.

Further, in some prior arts, PTFE is exemplified as it may be used as a binder for anodes for lithium ion cells (Patent Documents 2, 4 and 5). However, it is not described that PTFE is preferred, and there is no prior art in which PTFE is used in Examples. Although PTFE has a strong oxidative decomposition resistance, heat resistance and solvent resistance, PTFE is weak to reductive decomposition, and if PTFE is used with a carbonaceous anode, defluorination reaction results. That is why, PTFE has not been used as a binder for anodes for lithium ion cells. Further, in a case where SBR used as a binder for lithium ion cells is used for LTO anode, a drawback of weak fine particles-supporting force is remarkable. Therefore, in such a case, cell properties are insufficient.

Further, Patent Document 6 proposes LTO and modified LTO (hereinafter these are referred to as "LTO's") as an anode material. In Patent Document 6, as modified LTO, a hetero elements-doped LTO, a surface-modified LTO, etc. are exemplified, and evaluation examples in which PTFE was used as the binder, are mentioned. However, in evaluation of electrochemical properties of LTO's, an operation electrode made of the LTO's was used, and a cell for measuring electrochemical properties, in which a lithium metal foil is incorporated was used as an opposite electrode.

That is, the operation electrode made of the LTO's is positive to the lithium metal foil and thereby becomes a cathode. That is why, in Patent Document 6, the LTO's are not evaluated as the anode material.

Therefore, heretofore, binders for anodes, particularly binders for anodes for the LTO's have not been available, and their development has been desired.

### PRIOR ARTS

### PATENT DOCUMENTS

Patent Document 1: Japanese Patent 3555124
Patent Document 2: Japanese Patent 3866740
Patent Document 3: Japanese Patent 3894614
Patent Document 4: JP-A-2007-18882
Patent Document 5: JP-A-2001-35530
Patent Document 6: JP-A-2008-91079

### DISCLOSURE OF THE INVENTION

### OBJECT TO BE ACCOMPLISHED BY THE INVENTION

It is an object of the present invention to provide an anode composite for a nonaqueous electrolyte secondary cell whereby the above problems in prior arts can be solved, and properties of materials constructing electrodes can be fully obtained, and a nonaqueous electrolyte secondary cell.

### MEANS TO SOLVE THE OBJECT

The present inventors have conducted an extensive study in order to solve the above problems, and as a result, they have found that by using a mixture of a fibrillated PTFE and an amorphous resin as a binder for an electrode composite, an ion path can be prevented from being clogged, and a surface of an electrode active material can be prevented from being shielded, whereby a strong fine electrode active material supporting force and strong electrode adhesion property can be realized, and the above problems can be solved. Thus, the present invention has been accomplished.

That is, the present invention provides an anode composite for a nonaqueous electrolyte secondary cell having the following construction and a nonaqueous electrolyte secondary cell formed from the anode composite for a nonaqueous electrolyte secondary cell.
(1) An anode composite for a nonaqueous electrolyte secondary cell, which comprises an electrode active material having a lithium intercalation-deintercalation potential higher by at least 0.4 V than the standard electrode potential of Li/Li⁺, and a binder containing a fibrillated PTFE and an amorphous resin.
(2) The anode composite for a nonaqueous electrolyte secondary cell according to the above (1), wherein the electrode active material is LTO represented by the compositional formula LiₓTi_{y}O₄ (wherein, 0.5≦x≦<3, and 1≦y≦2.5).
(3) The anode composite for a nonaqueous electrolyte secondary cell according to the above (1) or (2), which is made of an electrode-forming paste which contains the electrode active material and a binder consisting of an aqueous dispersion of the polytetrafluoroethylene and an aqueous dispersion of the amorphous resin.
(4) The anode composite for a nonaqueous electrolyte secondary cell according to the above (3), wherein the PTFE is fibrillated by shearing force applied to the electrode-forming paste which contains the electrode active material and the binder and/or by rolling applied to a layer for the anode composite.
(5) The anode composite for a nonaqueous electrolyte secondary cell according to the above (3) or (4), wherein the electrode-forming paste is an aqueous paste containing an aqueous medium as a dispersant.
(6) The anode composite for a nonaqueous electrolyte secondary cell according to any one of the above (1) to (5), wherein the amorphous resin is a fluoropolymer.
(7) The anode composite for a nonaqueous electrolyte secondary cell according to any one of the above (1) to (6), wherein the lithium intercalation-deintercalation potential is higher by at least 1.0 V than the standard electrode potential of Li/Li⁺.
(8) The anode composite for a nonaqueous electrolyte secondary cell according to any one of the above (1) to (7), wherein the mixing ratio of the fibrillated polytetrafluoroethylene to the amorphous resin is from 1.0:9.0 to 9:0.1.
(9) The anode composite for a nonaqueous electrolyte secondary cell according to any one of the above (1) to (8), wherein the content of the binder is from 0.01 to 15 mass% based on the electrode active material.
(10) A nonaqueous electrolyte secondary cell, which has an anode made of the anode composite for a nonaqueous electrolyte secondary cell as defined in any one of the above (1) to (9).

### EFFECTS OF THE INVENTION

In the anode composite of the present invention, a mixture of a fibrillated PTFE and an amorphous resin is used as a binder, and a three-dimensional network structure can be formed by the fibrillated PTFE. The fibrillated PTFE has a function to support and sustain a fine particle state powder material for an electric cell in such a fine three-dimensional network structure. On the other hand, the amorphous resin has a function to strongly bond an electrode composite sustained by the fibrillated PTFE to a current collector.

With the three-dimensional network structure formed by the fibrillated PTFE, the supported fine particle powder material can be prevented from dropping, and ion flow or a surface of an electrode active material can be prevented from being shielded. Thus, the concentration of lithium ions can be uniform over the entire surface of the electrode active material, and the effect to prevent a local excessive charging state or a local excessive discharging state is remarkably high. In addition, the amorphous resin compliments the weak adhesion of PTFE with the substrate, so that they are bonded strongly. Thus, with the anode composite of the present invention, performances of the material constructing cells itself can be almost perfectly obtained, and such performances can be obtained for a long period of time.

Further, the anode electrode active material of the present invention has a lithium intercalation-deintercalation potential higher by at least 0.4 V than the standard electrode potential of Li/Li⁺, whereby even if PTFE is used as a binder for the anode, PTFE is free from the reductive decomposition, PTFE stably supports a powder material constructing cells for a long period, and excellent cell properties can be continuously obtained.

Further, in the present invention, the three-dimensional network formed by the fibrillated PTFE has sufficient durability against deformation due to charge and discharge of electrode active materials.

### MODE FOR CARRYING OUT THE INVENTION

The anode composite for a nonaqueous electrolyte secondary cell (hereinafter, referred to simply as anode composite) of the present invention comprises an electrode active material having a lithium intercalation-deintercalation potential higher by at least 0.4 V than the standard electrode potential of Li/Li⁺ and a binder containing PTFE and an amorphous resin and is **characterized in that** the fine electrode active material is supported and sustained by the binder containing a fibrillated PTFE and the amorphous resin.

As the electrode active material used for the anode composite of the present invention, all electrode active materials having a lithium intercalation-deintercalation potential higher by at least 0.4 V than the standard electrode potential of Li/Li⁺ can be preferably used. When the lithium intercalation-deintercalation potential is higher by at least 0.4 V (in the present invention, the lithium intercalation-deintercalation potential is represented based on the standard electrode potential of Li/Li⁺), the nonaqueous electrolyte secondary cell of the present invention will not reach a potential level lower than 0.3 V where the reductive decomposition of -CF₂CF₂ chains in PTFE begins, and PTFE will not be reductively decomposed. That is, a nonaqueous electrolyte secondary cell employing PTFE as a binder for an anode can be realized for the first time. On the other hand, if the lithium intercalation-deintercalation potential is lower than 0.4 V, the PTFE may be reductively decomposed, such being undesirable. The lithium intercalation-deintercalation potential is more preferably higher than 1.0 V, since the high safety can be maintained even when the particle size of the anode electrode active material is made to be 1.0 µm or less. On the other hand, if the lithium intercalation-deintercalation potential is higher than 2.5 V, the charge/discharge capacity tends to be small. Therefore, the lithium intercalation-deintercalation potential is preferably at most 2.5 V. The lithium intercalation-deintercalation potential is more preferably at most 2.0 V, whereby a high charge/discharge capacity can be obtained.

As the electrode active material which satisfies the above condition and can be used as the anode composite of the present invention, a metal, an alloy consisting of plural metals, an oxide of a metal or an alloy, a sulfide or a nitride may, for example, be mentioned. Specifically, an oxide of titanium or a titanium alloy, an oxide of tin or a tin alloy, an oxide of a silicon alloy, a metal such as cadmium, indium, antimony, tungsten, lead or bismuth, an alloy of such metals, an oxide of such metals, lithium cobalt nitride, titanium sulfide, molybdenum sulfide, iron sulfide or lithium iron sulfide may, for example, be mentioned. Among them, a titanium-containing metal oxide is particularly preferred, since the influence on environment is small, and excellent cell properties can be obtained.

The titanium-containing metal oxide may, for example, be a titanium metal oxide, LTO (lithium-titanium composite oxide), a titanium oxide wherein the above oxide is doped with a different element and/or a constituting element is substituted by a different element, or LTO derivatives.

The titanium oxide may, for example, be titanium oxide, and an anatase type titanium oxide or a low crystalline titanium oxide is preferred, since excellent cell properties can be obtained.

LTO is represented by LiₓTi_{y}O₄ (wherein 0.5≦x≦3, and 1≦y≦2.5), and LTO having various crystal structures such as a spinel type or a ramsdellite type may be used. A hetero element-substituted oxide titanium wherein a part of titanium is substituted by one or plural different metals or a titanium composite oxide which is a composite of titanium and a hetero element may preferably be used in the present invention. The hetero element used with titanium may, for example, be magnesium, aluminum, phosphorus, vanadium, chromium, manganese, iron, cobalt, nickel, copper, zinc, zirconium, niobium, molybdenum, tin or tungsten.

As the method for producing LTO, various methods may be mentioned, and for example, the method described in Patent Document 3 may be mentioned.
Specifically, for example, a lithium-titanium composite oxide which obtains excellent cell properties can be produced by a solid phase method such that the composite oxide is produced by mixing powder materials for components of the composite oxide in the predetermined ratio, followed by firing. Further, substitution or doping with a different element can be carried out also by the solid phase method. Further, LTO can be easily produced by a liquid phase method such that starting material components are used as compounds which are soluble in water or another solvent, and titanium is formed into a composite with a different element.

Usually, the latter liquid phase method is considered to be preferred to obtain cell properties, since starting material components can be formed into fine powders and can be uniformly mixed. However, depending on the desired cell properties, the solid phase method may be preferred. Therefore, the method cannot be decided indiscriminately. On the other hand, the method for preparing electrode active materials, which is the combination of a solid phase method and a liquid phase method described in JP-A-11-049519 can also be employed for producing LTO of the present invention.

Obtaining cell properties of the secondary cell is also influenced by powder properties of electrode active materials. Particularly, since the particle size and the specific surface area substantially influence cell properties and can be easily changed and controlled, they are important indexes. The particle size of electrode active material particles for lithium ion cells is usually selected within the range where the average particle size is from a few micrometer to a few tens micrometer. If the average particle size is smaller than a few micrometer, the specific surface area becomes large, an undesirable side reaction between the electrode active material and an electrolyte becomes remarkable, and it is difficult to secure safety of cells. Further, if the average particle size is larger than a few tens micrometer, the electrode active material inside of particles cannot be effectively used. The average particle size within the range of a few micrometer to a few tens micrometer is specifically from 2 µm to 80 µm.

However, the average particle size of LTO of the present invention is preferably from 0.001 to 6 µm.

Since the safety of LTO of the present invention is remarkably high, even if the active surface area is increased, an undesirable side reaction with an electrolyte solution will not occur. Therefore, the above range of the average particle size is selected. In addition, when the active surface area is increased, the effects to improve a high load characteristic and improve cell power can be obtained. Thus, in the present invention, the active surface area is preferably increased.

The average particle size of LTO is more preferably from 0.01 to 4 µm, further preferably from 0.05 to 2 µm. When the average particle size is remarkably small, the demerit of the difficulty to process and form electrodes and to support the electrode active material or the like is more than the merit obtained by increasing the surface area. The specific surface area of LTO is preferably from 1 to 100 m²/g. The specific surface area of LTO is more preferably from 2 to 50 m²/g.

Further, in the case of LTO, some powder properties substantially influence cell properties. Specifically, the above mentioned small pores of LTO influence cell properties. It is known that the pore size of LTO is usually at most 0.05 µm by a mercury intrusion technique. In the present invention, the mode average of the pore size is preferably at most 0.05 µm. If the mode average of the pore size is larger than 0.05 µm, the strength of the electrode active material itself is remarkably lowered, and the electrode density is also remarkably lowered. Further, if the mode average of the pore size is lower than 0.001 µm, the penetration of the electrolyte solution tends to be difficult, and cell properties cannot be improved. Here, the mode average of the pore size means the pore size that the appearance frequency of the pore size distribution is highest.

The porosity of LTO also influences cell properties. The porosity of LTO is preferably from 0.0001 to 0.7 mL/g. If the porosity is lower than 0.0001 mL/g, the effect to improve cell properties by pores is too small. If the porosity is higher than 0.7 mUg, the packing density of the electrode active material is too small. The porosity is more preferably from 0.001 to 0.5 mUg.

When the porosity is within the above range, low density due to voids can be compensated, and excellent cell properties can be obtained.

The binder constituting the anode composite of the present invention is characterized by containing a fibrillated PTFE and an amorphous resin. Fibrils of PTFE are three-dimensionally extended to form a three-dimensional network of the fibrils one another.

The three-dimensional network formed by the fibrils of PTFE has an excellent powder supporting property, and even if the powder itself or the network is deformed, the powder incorporated in the network can be prevented from dropping.

PTFE can be fibrillated by various methods. For example, PTFE is fibrillated by applying shearing force to the electrode-forming paste containing the electrode active material and a binder or by rolling applied to a layer for the anode composite, and the combination of both methods is more preferred. PTFE is preferably fibrillated highly. However, if PTFE is highly fibrillated by only the former method, it may be difficult to form a uniform coating film with the electrode-forming paste containing highly fibrillated PTFE in some cases. Further, if PTFE is fibrillated by only the latter method, PTFE cannot be fibrillated sufficiently, and not fibrillated PTFE particles remain in many cases.

The method wherein PTFE is partially fibrillated by applying shearing force to an electrode-forming paste, and then PTFE is sufficiently fibrillated by applying rolling to a layer of the anode composite formed from the electrode-forming paste is more preferred, since a highly developed three-dimensional network can be formed by PTFE.

In the case of fibrillation of PTFE by applying shearing force to an electrode-forming paste, the shearing force is usually preferably at least 0.1 Pa (gauge pressure, the same applies below), though it depends on the viscosity or temperature of the paste. The shearing force is usually preferably from 0.05 to 500 Pa. If the shearing force is smaller than 0.05 Pa, the force for extending PTFE particles to form fibrils is weak.

On the other hand, if the shearing force is larger than 500 Pa, PTFE particles are fibrillated in an extremely short time, and it is thereby difficult to uniformly mix the paste and to control the formation of fibrils. The shearing force is more preferably from 0.1 to 300 Pa. When the shearing force is within this range, the paste can be uniformly mixed, while fibrillation can be controlled.

Further, in a case where PTFE is fibrillated by applying rolling to a layer for the anode composite, although it depends on the composition of the anode composite or flowability, the rolling pressure is usually preferably at least 50 MPa, more preferably from 100 to 1,000 MPa.

The rolling temperature is preferably from 30 to 350°C, more preferably from 50 to 300°C.

The cell electrode is usually formed by supporting a powder material by a binder, followed by bonding the powder material on a current collector. However, PTFE has little adhesive property to an aluminum foil or a copper foil which is a current collector. In the cell electrode, a charge transfer reaction of the electrode active material in the electrode composite is substituted by flow of electrons through the current collector, and the electrode active material is charged and discharged and thereby has a function as an electric cell. Therefore, it has been considered that it is difficult to employ PTFE which cannot be adhered to the electrode composite and the current collector as a binder for the cell. The present inventors solved this problem by combining PTFE with an amorphous resin, whereby it is possible to use a PTFE binder which is free from shielding ion flow in the electrode composite.

Almost all commercially available PTFE can be used as PTFE in the present invention. However, from the viewpoint of compatibility and cost in the process for producing electric cells, an aqueous emulsion wherein PTFE fine particles are dispersed in water is preferred. The PTFE aqueous emulsion is already known and commercially available widely and can be easily obtained.

The average particle size of the PTFE particles in the PTFE aqueous emulsion is preferably small. Specifically, the average particle size is preferably from 0.01 to 10 µm, more preferably from 0.05 to 2 µm, further preferably from 0.1 to 1 µm. If the average particle size of PTFE fine particles is less than 0.01 µm, it is difficult to form fibrils. Further, if the average particle size of the PTFE fine particles exceeds 10 µm, the PTFE aqueous emulsion itself becomes unstable, and it is difficult to use such a PTFE aqueous emulsion.

Similarly, the average particle size of the amorphous resin to be used in the present invention is preferably from 0.01 to 10 µm, more preferably from 0.05 to 2 µm, further preferably from 0.1 to 1 µm. When the average particle size of the amorphous resin is within the above range, it is easy to prepare an amorphous resin aqueous emulsion, and its stability is excellent. As a result, the anode composite of the present invention has an excellent adherence on the collector.

PTFE to be used in the present invention may be PTFE copolymerized with another monomer so long as fibrillation is possible. The copolymerizable monomer may, for example, be a fluoromonomer such as vinylidene fluoride, hexafluoropropylene, a perfluoro(alkyl or alkyloxyalkyl vinyl ether) represented by the formula (1): CF₂=C(OR_{f})ₙF₂₋ₙ (wherein, R_{f} is a C₁₋₈ perfluoroalkyl group or a perfluoroalkyloxyalkyl group having at least one ether linkage in its molecule, n is an integer of 1 or 2, and each carbon chain may be linear, branched or have a ring structure) or chlorotrifluoroethylene. In addition to the fluoromonomer, the alkyl or alkyloxyalkyl vinyl ether represented by the formula (2): CH₂=CHOR (wherein, R is a C₁₋₈ alkyl group or an alkyloxyalkyl group having at least one ether linkage, and each carbon chain may be linear, branched or have a ring structure), ethylene or propylene may be mentioned.

In addition, the polymerizable monomer may, for example, be 1-bromo-1,1,2,2-tetrafluoroethyl trifluorovinyl ether, vinyl chrotonate, vinyl methacrylate, maleic anhydride, itaconic anhydride, maleic acid or itaconic acid. If a copolymer comprising one of the above copolymerizable monomer or at least two of the above copolymerizable monomers in combination can be fibrillated, such a copolymer can be preferably used in the present invention.

As the amorphous resin which is used as the binder with PTFE in the present invention, any of a fluororesin, a resin containing no fluorine and an amorphous resin may be preferably used. However, a fluororesin having compatibility with PTFE and a high durability is preferred, and an aqueous dispersion of an amorphous resin is preferred, similarly to PTFE.

As the amorphous fluoropolymer, an amorphous copolymer prepared by copolymerizing at least two monomers selected from the first group consisting of tetrafluororesin, vinylidene fluoride, hexafluoropropylene, the perfluoro(alkyl or alkyloxyalkyl vinyl ether) of the formula (1) and chlorotrifluoroethylene ; or an amorphous copolymer prepared by copolymerizing at least one monomer selected from the first group and at least one monomer selected from the second group consisting of the alkyl or alkyloxyalkyl vinyl ether of the formula (2), ethylene and propylene can be preferably used. Further, the above-mentioned copolymerizable another monomer may be contained.

As the amorphous resin containing no fluorine which is used as the binder together with PTFE in the present invention, an aqueous dispersion of amorphous resin fine particles prepared by copolymerizing at least one copolymerizable monomer selected from the group consisting of the alkyl or alkyoxyalkyl vinyl ether of the formula (2), an olefin such as ethylene or propylene, an aromatic vinyl compound such as styrene, α-methylstyrene or p-vinyl toluene, an aliphatic vinyl compound such as vinyl acetate or vinyl chrotonate, a conjugated diene such as 1,3-butadiene or isoprene and a copolymerizable monomer such as methacrylic acid, acrylic acid, maleic anhydride, itaconic anhydride, maleic acid or itaconic acid may be used.

The mixing ratio (mass ratio) of PTFE and the amorphous resin which constitute the binder of the present invention is preferably from 1.0:9.0 to 9.9:0.1, more preferably from 2.0:8.0 to 9.8:0.2, further preferably from 3.0:7.0 to 9.7:0.3. When the mass ratio of the fibrilled PTFE to the amorphous resin is within the above range, the electrode composite is excellent in the supporting property of electrode active materials or the like and adherence to a substrate, ion flow in the electrode composite can be prevented from being shielded, and the solvent resistance and the heat resistance are excellent.

In order to produce an aqueous dispersion of PTFE, PTFE is preferably produced by emulsion polymerization in which water is used as a dispersion medium. As mentioned above, emulsion polymerization of PTFE is already known. In emulsion polymerization of fluoromonomers such as PTFE, a fluoroemulsifier is used in many cases. Generally, as the fluoroemulsifier, ammonium perfluorooctanate or the like is used in many cases. However, since such a emulsifier is highly concentrated in human body, it is desired not to use such a emulsifier as possible due to the health hazard.

The fluoropolymer such as PTFE in the present invention is a fluorocompound represented by the formula (3): R-X (wherein, R is a C₃₋₁₅ fluoroalkyl group or a C₃₋₁₅ fluoroalkyl group having an etheric oxygen atom, which has from 7 to 13 fluorine atoms, the fluoroalkyl group may have a side chain of C₁₋₃ fluoroalkyl group, X is a carboxylic acid, an alkali metal salt or an ammonium salt of a carboxylic acid, sulfonic acid or an alkali metal salt or an ammonium salt of sulfonic acid, and the total number of carbon atoms in R-X is from 4 to 16). Among them, one prepared as an emulsifier for emulsion polymerization is preferred, for example C₃F₇OCF₂CF₂SO₃NH₄, C₃F₇OCF₂COONH₄, CF₃OCF₂CF₂OCF₂CF₂SO₃NH₄, CF₃OCF₂CF₂OCF₂COONH₄, CF₃OCF₂OCF₂OCF₂CF₂SO₃NH₄, CF₃OCF₂OCF₂OCF₂COONH₄, C₃F₇OCF(CF₃)CF₂SO₃NH₄, C₅F₁₁COONH₄, C₄F₉OCF₂COONH₄, C₂F₅OCF₂CF₂OCF₂COONH₄, C₃F₇OCF(CF₃)COONH₄, CF₃O(CF₂)₃OCF₂COONH₄, C₅F₁₁OCF₂COONH₄, C₄F₉OCF(CF₃)COONH₄ or C₃F₇OCF₂CF₂OCF₂COONH₄.

Such emulsifiers are preferred, since they also have an effective function as a dispersant in the preparation of an aqueous paste for forming the after-mentioned electrode composite.

In a case where an aqueous dispersion of a polymer is used as the binder, the concentration of the polymer in the aqueous dispersion is usually preferably from 10 to 80 mass%, more preferably from 20 to 70 mass%.

The content of the binder is adjusted depending on types or properties of the electrode active material, however, the content of the binder is usually preferably from 0.01 to 15 mass%, more preferably from 0.1 to 12 mass%, based on the amount of the electrode active material.

The anode composite of the present invention may contain a conductivity assistant. As the conductivity assistant, a conductive carbonaceous material or a conductive ceramics may preferably be used.

As the conductive carbonaceous material, a graphite such as natural graphite or artificial graphite, a carbon black such as thermal black, furnace black, channel black, lamp black, acetylene black or ketjen black, needle corks, carbon fiber or the like may preferably be used.

The average particle size of the conductivity assistant is usually preferably from 3 to 1,000 nm, more preferably from 5 to 200 nm. However, graphite having an average particle size of few tens micrometer or carbon fiber having a fiber length of a few micrometer may be used, and the average particle size of the conductivity assistant varies depending on shapes.

As the conductivity ceramics, titanium oxide or the like is preferably used.

The content of the conductivity assistant is decided depending on types or properties of the electrode active material, however, the content of the conductivity assistant is usually preferably from 0.01 to 15 mass%, more preferably from 0.1 to 12 mass%, based on the amount of the electrode active material.

As the conductivity assistant, a hydrophilic conductive carbonaceous material may be used. Particularly, a boron modified acetylene black or the like which can impart a hydrophilic property without impairing the conductivity is preferred as the conductivity assistant used for the anode composite of the present invention, since an aqueous paste for coating the electrode can also be easily prepared.

The anode composite of the present invention comprises at least the above anode active material and the binder and as the case requires, contains an conductivity assistant and other components.

The anode composite can be formed by preparing a paste wherein starting materials for the above components and other components which can be incorporated are dispersed in a dispersant, coating a current collector with the paste and drying it.

As other components, a dispersion stabilizing agent and/or a thickener may be contained in the paste. The dispersion stabilizing agent and/or the thickener is a component for stabilizing the dispersion of the paste or appropriately controlling the viscosity, however, such other components may be components which remain in the coated electrode composite and have a function as a binder. The dispersion stabilizing agent and/or the thickener may, for example, be a carboxy methyl cellulose, a methyl cellulose, a crown ether, a dextrin or an aqueous dietary fiber. The amount of the dispersion stabilizing agent and/or the thickener to be added is preferably from 0.01 to 10 mass%, more preferably from 0.1 to 5 mass%, based on the total amount of the paste.

So long as starting material components contained in the anode composite can be uniformly dispersed, various dispersants can be used for preparing the paste. Various organic solvents are usually used, however, in the present invention, an aqueous medium is preferably used as a dispersant for the electrode-forming paste. The aqueous medium may be composed of only water such as ion exchanged water.

Further, in order to improve the adherence between the anode composite and the current collector, other than water, an aqueous medium containing an aqueous compound having a higher boiling point than water may be used as the aqueous medium. The aqueous compound having a higher boiling point than water may, for example, be an organic solvent such as dimethylformamide, dimethylacetamide, dimethylsulfoxide, tetramethylene sulfone, NMP, an ethylene glycol, a propylene glycol or glycerol. The content of the organic solvent is usually preferably from 0 to 50 mass%, based on the total amount of water and the organic solvent. In the present invention, the content of the aqueous medium in the aqueous paste is preferably from 30 to 90 mass%, more preferably from 35 to 75 mass%.

The aqueous paste is prepared by adding a material constituting the electrode in a dispersant containing an aqueous medium such as ion exchanged water, followed by mixing and stirring it. The electrode active material, the conductivity assistant, the binder, etc. are preferably mixed and arranged in a uniform and fine state. In such a state, properties of constituting materials can be fully and stably obtained for a long period. That is, since the electrode reaction is an interfacial reaction of the electrode active material, the active surface which is effective to the electrode reaction is increased by forming the electrode active material into fine particles, whereby their properties can be fully obtained. Further, when the electrode active material and the conductive assistant are uniformly arranged in the electrode composite, the interfacial charge transfer reaction is transferred to flow of electrons and conducted to a current collector, whereby the electrode composite can work as an excellent secondary cell. Therefore, the aqueous paste is preferably prepared by basically dissolving soluble materials in a dispersant, followed by adding other materials so that they are not aggregated as possible. Specifically, the stirring is preferably carried out by applying strong shearing stress to a dispersant, or the paste is preferably prepared by carrying out a fining treatment or a uniform mixing treatment of materials by means of a ball mill or a beads mill.

The anode composite of the present invention can be prepared by coating a current collector with the above aqueous paste, followed by drying it.

The current collector is coated with the aqueous paste by a doctor blade method, a roll coating method, a screen printing method or the like. The thickness of the coating film is usually from 3 to 500 µm, more preferably from 10 to 300 µm.

The drying temperature is preferably from 50 to 350°C, more preferably from 50 to 300°C.

The anode electrode density of the anode composite of the present invention may be appropriately selected, and it is preferably from 1 to 5 g/cm³, more preferably from 1.5 to 4.5 g/cm³.

As materials constructing secondary cells, in addition to the above anode, at least a cathode, a separator and an electrolyte are necessary.

In the anode composite of the present invention, such construction materials for secondary cells can be used without any restriction, and materials which are usually used for lithium secondary cells can be used.

As the cathode active material, various metal oxides, various metal sulfides or various conductive organic compounds may, for example, be used, and they can also preferably be used in the present invention. The metal oxide may, for example, be a lithium metal composite oxide such as LiMn₂O₄, LiNiO₂ or LiCoO₂ or a metal oxide of an olivine such as LiFePO₄ or LiMnPO₄. Such a lithium metal composite oxide can exhibit stable cell properties for a long period. These metal oxides can be used as a composite oxide of Li with another one metal, or may be used as a composite oxide of Li with plural other metals.

For example, in the case of the lithium-nickel composite oxide, LiNiO₂ is not scarcely used as it is as the cathode for lithium ion cells, and a material in which a part of or most of lithium or nickel is replaced by at least one element selected from the group consisting of Co, Mn, Al, B, Cr, Cu, F, Fe, Ga, Mg, Mo, Nb, O, Sn, Ti, V, Zn, Zr and other elements, is preferably used.

As the cathode active material, manganese dioxide, iron oxide or vanadium oxide may, for example, be mentioned. Further, a conductive polymer such as polyaniline or polypyrrole, iron sulfide, sulfur, a disulfide polymer or carbon fluoride may be used as the cathode active material.

Such a cathode active material is also formed into a composite containing a conductivity assistant, a binder etc. and formed on a cathode current collector. As the conductive assistant, the conductive assistant which can be used for the anode composite of the present invention such as acetylene black may also be used. Further, as the binder, the binder which can be used for the anode composite of the present invention may also be used as it is.

As a separator, a polyethylene or a polypropylene or a porous body which is the combination of the polyethylene and the polypropylene is usually widely used, since they are excellent in safety. Any porous body can be used as the separator in the present invention. As the separator, a fluoropolymer such as PTFE, a polychlorotrifluoroethylene, a polyvinylidene fluoride, a tetrafluoroethylene/perfluoroalkyl vinyl ether copolymer, a tetrafluoroethylene/hexafluoropropylene copolymer, a tetrafluoroethylene/propylene copolymer or an ethylene/tetrafluoroethylene copolymer; a polyamide, a polyimide, a polyamide imide, a polyether imide, a polyarylate, a polysulfone, a polyether sulfone, a polyether ether ketone, a polyethylene terephthalate, a polybutylene terephthalate, polyacrylonitrile, a polyacrylonitrile modified rubber, an acrylonitrile/styrene/acrylate copolymer, a copolymer containing another acrylonitrile unit or a porous body such as cellulose may be used.

Further, an inorganic filler may be composited in the separator. Particularly, when an inorganic filler layer is formed on the anode surface, the reduction decomposition resistance can be improved, whereby high safety can be realized. The inorganic filler may, for example, be alumina, titanium oxide, zirconia, magnesium oxide or silica.

As the electrolyte, any electrolyte may be used, so long as it is an aqueous electrolyte for lithium secondary cells. The nonaqueous electrolyte is usually soluble in an organic solvent or the like for use. A gel polymer electrolyte which is the combination of an electrolyte solution and a polymer may also be used. As the nonaqueous electrolyte, a normal temperature-meltable salt such as an ionic liquid may also be used.

The electrolyte may, for example, be a lithium salt such as lithium perchlorate, lithium hexafluorophosphate, lithium tetrafluoroborate, lithium trifluoromethasulfonate or bistrifluoromethylsulfonyl imide lithium. Particularly, since lithium hexafluorophosphate tends not to be oxide-decomposed, it is used widely. As the electrolyte, one electrolyte may be used, or a mixture of at least two electrolytes may be used.

The organic solvent may, for example, be a ring carbonate such as propylene carbonate, ethylene carbonate or vinylene carbonate; a chain carbonate such as diethyl carbonate, dimethyl carbonate or methylethyl carbonate; a ring ether such as tetrahydrofuran, 2-methyltetrahydrofuran or dioxolane; a chain ether such as dimethoxyethane or diethoxyethane; γ-butyrolactone; acetonitrile; or sulforane. In the present invention, one organic solvent, or a mixture of at least two organic solvents may be used. Particularly, in the present invention, an electrolyte containing γ-butyrolactone is preferred for the anode composite made of an electrode active material having a high operating potential. An excellent protective film is formed with γ-butyrolactone even on the electrode active material surface having a high operating potential, whereby self-discharge is suppressed, and a cycle life property is improved.

The polymer for the gel electrolyte may, for example, be a polyvinylidene fluoride, a polyacrylonitrile or a polyethylene oxide, and they are preferably used in the present invention.

As a battery driving apparatus, a button type, a square type, a cylinder type, a sheet type, a lamination type, a mobile device for small battery, a large battery for automobiles or electric power storage or integral battery may be preferably used in the nonaqueous electrode secondary cell employing the anode composite of the present invention.

As a material of the driving apparatus, a metal or a laminate film wherein a metal layer and a resin layer are laminated may be preferably used.

As a metal container, stainless steel may be used, and aluminum or an aluminum alloy is preferred from the viewpoint of light weight and excellent durability.

The metal layer for the laminate film is preferably an aluminum foil or an aluminum alloy foil from the viewpoint of light weight. As the resin layer for the laminate film, a polymer such as a polypropylene, a polyethylene, a nylon, a polyethylene terephthalate or the like may be used.

### EXAMPLES

Now, the present invention will be described in further detail with reference to Examples. However, it should be understood that the present invention is by no means thereby restricted such specific Examples.

Preparation Examples of an aqueous dispersion, a lithium-titanium composite oxide, an anode active material for lithium ion battery and a cathode active material for lithium ion battery used in Examples and Production Examples ((1) to (10)) are described below.

### (1) Preparation of a PTFE aqueous dispersion (A) containing a fluorosurfactant

736 g of a paraffin wax, 59 L of ultrapure water and 33 g of C₂F₅OCF₂CF₂OCF₂COONH₄ (hereinafter referred to as "EEA") were charged in a 100 L pressure resistance polymerization tank. The temperature was raised to 70 °C. Then nitrogen was purged, and the tank was deaerated. Then, while stirring, tetrafluoroethylene was introduced until the internal pressure became 1.9 MPa (gauge pressure, the same applies hereinafter). 1 L of a 0.5 mass% succinic acid peroxide aqueous solution was injected thereto to initiate the polymerization.

The polymerization was carried out for 45 minutes, while tetrafluoroethylene was supplied, and the polymerization pressure was maintained at 1.9 MPa. Then, the temperature was raised to 90°C, 1 L of a 5.6 mass% EEA aqueous solution was added, and the reaction was continued for 95 minutes. The temperature was cooled to room temperature, aggregates, paraffin, etc. were removed from an obtained suspension, and 26.9 kg of a PTFE aqueous dispersion (A) for a binder, which has a PTFE content of 24.3 mass%, an EEA content of 0.12 mass% and an average particle size of PTFE of 0.19 µm was obtained. A part of PTFE was obtained from (A) and purified and dried. The purified and dried PTFE was subjected to thermal analysis. As a result, it was a crystalline polymer having a melting point of 327°C.

### (2) Preparation of PTFE aqueous dispersion (B) containing a small amount of fluorosurfactant

A nonionic surfactant containing a polyoxyethylene lauryl ether (average polymerization degree: 9) was added to and dissolved in 0.2 kg of an aqueous dispersion prepared in the same manner as in (A), and 0.3 kg of an anion exchange resin (Diaion WA-30, manufactured by Mitsubishi Chemical Corporation) was dispersed therein. The mixture was stirred for 24 hours, and the anion exchange resin was removed by filtration. 0.04 kg of 28 mass% ammonium water was added to a filtrate, and the filtrate was concentrated by a phase separation method at 80°C for 10 hours to remove a supernatant liquid. Then, 0.1 kg of the nonionic surfactant was newly added to prepare 10.5 kg of a crystalline PTFE aqueous dispersion (B) for a binder, which has a PTFE content of 59.7 mass%, an EEA content of 0.01 mass% and an average particle size of PTFE of 0.20 µm. A part of PTFE was removed from (B), purified and dried. The purified and dried PTFE was subjected to thermal analysis. As a result, it was a crystalline polymer having a melting point of 327°C.

### (3) Preparation of an amorphous fluoropolymer aqueous dispersion (C)containing a fluorosurfactant

1.5 L of ion exchanged water, 40 g of disodium hydrogen phosphate dodecahydrate, 0.5 g of sodium hydroxide, 198 g of tertiary butanol, 8 g of EEA and 2.5 g of ammonium persulfate were charged and dissolved in a 3 L pressure resistance polymerization tank. Then, 200 g of an aqueous solution in which 0.4 g of ethylene diamine tetra acetic disodium salt·dihydrate and 0.3 g of ferrous sulfate heptahydrate are dissolved was introduced. Then, while stirring, a mixed gas of tetrafluoroethylene/propylene (molar ratio 85/15) was introduced so that the internal pressure became 2.5 MPa, and a 2.5 mass% Rongalite (sodium formaldehyde sulfoxylate) aqueous solution was added to initiate the polymerization.

The polymerization was carried out for 5.5 hours, while 800 g of a mixed gas of tetrafluoroethylene/propylene (molar ratio 56/44) was additionally supplied to maintain the polymerization pressure at 2.5 MPa. Aggregates, etc. were removed from an obtained suspension, and 2,520 g of an amorphous fluoropolymer aqueous dispersion (C) for a binder, which has a content of a copolymer of tetrafluoroethylene and propylene of 30.8 mass%, an EEA content of 0.32 mass% and the average particle size of the copolymer of 0.17 µm was obtained. A polymer prepared by removing a part of the aqueous dispersion (C), followed by purifying and drying was an amorphous polymer having the copolymerization molar ratio of tetrafluoroethylene/propylene of 56.3/43.7.

### (4) Preparation of amorphous fluoropolymer aqueous dispersion (D) containing no fluorosurfactant

1.0 L of ion exchanged water, 2.2 g of potassium carbonate, 0.7 g of ammonium persulfate, 31 g of a polyoxyethylene alkyl ether, 1 g of sodium lauryl sulfate, 161 g of ethyl vinyl ether, 178 g of cyclohexyl vinyl ether and 141 g of 4-hydroxybutyl vinyl ether were charged in a 3 L pressure resistance polymerization tank, and cooling and nitrogen gas injection were repeated to deaerate. Then, 482 g of chlorotrifluoroethylene was charged, and the polymerization reaction was carried out for 12 hours at 30°C. Aggregates were removed from an obtained suspension, and 1,250 g of an amorphous fluoropolymer aqueous dispersion (D) for a binder, which has a polymer content of 50.1 mass% and an average particle size of 0.25 µm was obtained. A polymer prepared by removing a part of the aqueous dispersion (D), followed by purification and drying was an amorphous copolymer having no crystalline melting point.

### (5) Preparation of amorphous hydrocarbon polymer aqueous dispersion (E) containing no fluorosurfactant

1,000 g of ion exchanged water, 2.5 g of sodium dodecyl benzene sulfonate, 5 g of potassium persulfate, 2.5 g of sodium bisulfate, 235 g of styrene, 195 g of butadiene, 50 g of methyl methacrylate and 20 g of itaconic acid where charged in a 3 L pressure resistance reaction tank. Cooling and nitrogen gas injection were repeated to deaerate. Then, the polymerization reaction was carried out for 6 hours at 45°C. Aggregates were removed from an obtained suspension, and 1,300 g of an acrylic modified styrene butadiene rubber aqueous dispersion (E) for a binder, which has a polymer content of 35.5 mass% and an average particle size of 0.22 µm was obtained. A polymer prepared by removing a part of the aqueous dispersion (E), followed by purification and drying was an amorphous copolymer having no crystalline melting point.

### (6) Production of Li₄Ti₅O₁₂ (F)

Lithium carbonate as a lithium source and titanium oxide as a titanium source were blended in an Li:Ti element ratio of 4.12: 5 and mixed by means of a ball mill. The mixture was provisionally fired at 500°C for 8 hours under air atmosphere. Then, the fired mixture was pulverized and mixed by means of a ball mill again, and fired at 800°C for 10 hours to obtain a lithium-titanium composite oxide. The lithium-titanium composite oxide was pulverized in ethanol by means of a ball mill and fired at 500°C for 10 minutes to produce L₁₄T₁₅O₁₂ (F) having an average particle size of 1.1 µm, a specific surface area of 5.1 m²/g, a mode average of a fine pore size of 0.008 µm and a porosity of 0.01 ml/g. The lithium intercalation-deintercalation potential of (F) was almost 1.5 V.

### (7) Production of Li₄Ti₃O₁₂ (G)

In the same manner as in the above production of (F) except that the lithium-titanium composite oxide was pulverized in ethanol by means of a ball mill for a longer time, Li₄Ti₃O₁₂ (G) having an average particle size of 0.8 µm, a specific surface area of 35.1 m²/g, a mode average of a fine pore size of 0.02 µm and a porosity of 0.15 ml/g was produced. The lithium intercalation-deintercalation potential of (G) was almost 1.5 V.

### (8) Production of Li₂Ti₃O₇ (H)

Lithium carbonate as a lithium source and titanium oxide as a titanium source were blended in an Li:Ti element ratio of 2.06:3 and mixed by a ball mill, and the mixture was preliminarily fired at 500°C for 2 hours and at 800°C for 5 hours under air atmosphere. The fired product was pulverized and mixed by a ball mill again, and provisionally fired at 1,100°C for 10 hours. The provisionary fired product was pulverized and mixed again by a beads mill, compaction-molded into a pellet shape and fired at 1,100°C for 20 hours to obtain a lithium-titanium composite oxide. The lithium-titanium composite oxide was pulverized in ethanol by a ball mill and fired at 500°C for 10 minutes to produce Li₂Ti₃O₇ (H) having an average particle size of 0.8 µm, a specific surface area of 38.8 m²/g, a mode average of a fine pore size of 0.02 µm and a porosity of 0.02 ml/g. The lithium intercalation-deintercalation potential of (H) was almost 1.5 V.

### (9) Preparation of lithium ion cell anode active material (I) [heterogeneous silicon]

240 g of silicon monoxide having an average particle size of 0.38 µm was added in 630 g of pure water and stirred. The obtained paste was spray-dried to prepare a dried powder. While supplying argon gas at a flow rate of 1 Umin, the dried powder was heated to 1,200°C at a temperature raising rate of 5°C/min and maintained at 1,200°C for 5 hours. Then, the dried powder was cooled at a cooling rate of -5°C/min to obtain heterogeneous silicon having an average particle size of 4.2 µm.

### (10) Preparation of cathode active material for lithium ion cell (J) [lithium(nickel/manganese/cobalt) composite oxide]

3.3 mol of nickel oxide prepared by firing nickel carbonate at 700°C for 15 hours under air atmosphere, 3.3 mol of manganese dioxide prepared by firing manganese carbonate at 700°C for 15 hours under air atmosphere, 3.3 mol of oxycobalt hydroxide having a low crystallinity and 5.1 mol of lithium carbonate were dispersed in pure water and treated for 2 hours by means of a beads mill (zirconia beads mill) having a diameter of 0.1 mm, followed by spray drying to obtain a dried powder. The obtained dried powder was fired at 850°C for 15 hours under air atmosphere to obtain a lithium (nickel/manganese/cobalt) composite oxide having an average particle size of 3.6 µm.

Further, in the following Examples, natural graphite was used as an anode active material for lithium ion secondary cells, and commercially available lithium-cobalt composite oxide was used as a cathode active material for lithium ion secondary cells.

In the following Examples, Examples 1, 2, 3, 6 and 8 are Working Examples, and Examples 4, 5, 7, 9, 10, 11 and 12 are Comparative Examples.

### EXAMPLE 1

0.74 g of carboxy methylcellulose was dissolved in 75 g of ion exchanged water, 2.3 g of commercially available acetylene black was added thereto, and the mixture was stirred for 1 minute by rotating a three-one motor provided with disk turbine fins at a rate of 450 rpm and dispersed. 6.1 g of PTFE aqueous dispersion (A), 0.7 g of amorphous fluoropolymer aqueous dispersion (D) (the molar ratio of PTFE and amorphous polymer is 8:2, and the total amount of the polymers corresponds to 1.85 g) and 60 g of Li₂Ti₃O₇ (H) dispersed in 25 g of ion exchanged water were added thereto, and the mixture was stirred for 1 minute in the same manner as in the above to obtain an aqueous paste for forming electrodes (anode-P1). The shearing force of the aqueous paste (anode-P1) at a wall surface of a container was calculated to 0.3 Pa.

Then, 18 µm of a copper foil was coated with the aqueous paste (anode-P1), dried at 120°C for 2 hours, and then subjected to a heat treatment at 150°C for 10 minutes, followed by press rolling at a pressure of 200 MPa to prepare an anode having an electrode density of 2.0 g/cm³.

Then, an aqueous paste for forming electrodes (cathode-P1) was obtained in the same manner as in the preparation of the aqueous paste (anode-P1) except that instead of 60 g of Li₂Ti₃O₇ (H), 60 g of the lithium (nickel/manganese/cobalt) composite oxide (J) was used. Next, a cathode having an electrode density of 3.4 g/cm³ was prepared in the same manner as in the preparation of the anode except that instead of the aqueous paste (anode-P1), the aqueous paste (cathode-P1) was used, and instead of the copper foil having a film thickness of 18 µm, an aluminum foil having a film thickness of 15 µm was used.

The anode and the cathode thus obtained were laminated via a separator made of a polyethylene porous film, and the laminate was rolled up and press-rolled at 90°C. Then, the laminate was put in a laminate film pack of aluminum and a polypropylene together with an ethylene carbonate and γ-butyrolactone (volume ratio of 1:2) electrolyte solution in which 1.5 mol/L of lithium borate tetrafluoride was dissolved to produce a laminate pack type nonaqueous electrolyte secondary cell model (1). Physical properties and evaluation results of the cell model (1) are shown in Tables 1 and 2. It is evident from Tables that the cell model (1) has an extremely excellent cell service life and load properties.

### EXAMPLE 2

An anode was prepared in the same manner as in Example 1, except that instead of 60 g of Li₂Ti₃O₇ (H), 60 g of Li₂Ti₃O₁₂ (G) was used. Further, a laminate pack type nonaqueous electrolyte secondary cell model (2) was produced in the same manner as in Example 1, except that the above prepared anode was used. Physical properties and evaluation results of the cell model (2) are shown in Tables 1 and 2. It is evident from Tables that the cell model (2) has a remarkably excellent cell service life and load properties.

### EXAMPLE 3

An anode was prepared in the same as in Example 1, except that instead of 60 g of Li₂Ti₃O₇ (H), 60 g of Li₄Ti₅O₁₂ (F) was used. Further, a laminate pack type nonaqueous electrolyte aqueous secondary cell model (3) was produced in the same manner as in Example 1, except that the above prepared anode was used. Physical properties and evaluation results of the cell model (3) are shown in Tables 1 and 2. It is evident from Tables that cell model (3) has a remarkably excellent cell service life and load properties.

### EXAMPLE 4

An anode was prepared in the same as in Example 1, except that instead of 60 g of Li₂Ti₃O₇ (H), 60 g of commercially available natural graphite was used. Further, a laminate pack type nonaqueous electrolyte secondary cell model (4) was produced in the same manner as in Example 1, except that the above prepared anode was used. Physical properties and evaluation results of the cell model (4) are shown in Tables 1 and 2. When cycle properties were evaluated, expansion of the cell model (4) was observed. It is considered that the cell model (4) expanded due to decomposition gas generated by reduction decomposition of PTFE.

### EXAMPLE 5

An anode was prepared in the same manner as in Example 1, except that instead of 60 g of Li₂Ti₃O₇ (H), 30 g of commercially available natural graphite and 30 g of the heterogeneous silicon (I) were used. Further, a laminate pack type nonaqueous electrolyte secondary cell model (5) was produced in the same manner as in Example 1, except that the above prepared anode was used. Physical properties and evaluation results of the cell model (5) are shown in Tables 1 and 2. When cycle properties of the cell model (5) were evaluated, expansion of the cell was observed. It is considered that the cell model (5) expanded due to decomposition gas generated by reduction decomposition of PTFE.

### EXAMPLE 6

An anode was prepared in the same manner as in Example 1, except that instead of 6.1 g of PTFE aqueous dispersion (A), 2.2 g of PTFE aqueous dispersion (B) was used, and instead of 0.7 g of amorphous fluoropolymer aqueous dispersion (D), 1.8 g of amorphous fluoropolymer aqueous dispersion (C) (the mass ratio of PTFE to amorphous polymer is 7:3, and the total amount of the polymer corresponds to 1.85 g) was used. Further, a laminate pack type nonaqueous electrolyte secondary cell model (6) was produced in the same manner as in Example 1, except that the above prepared anode was used. Physical properties and evaluation results of the cell model (6) are shown in Tables 1 and 2. It is evident from Tables that the cell model (6) has a remarkably excellent cell service life and load properties.

### EXAMPLE 7

An anode was prepared in the same manner as in Example 6, except that instead of 60 g of Li₂Ti₃O₇ (H), 60 g of commercially available natural graphite was used. Further, a laminate pack type nonaqueous electrolyte secondary cell model (7) was produced in the same manner as in Example 6 except that the above prepared anode was used. Physical properties and evaluation results of the cell model (7) are shown in Tables 1 and 2. When cycle properties were evaluated, expansion of the cell model (7) was observed. It is considered that the cell model (7) expanded due to decomposition gas generated by reduction decomposition of PTFE.

### EXAMPLE 8

An anode and a cathode were prepared in the same manner as in Example 1, except that instead of 60 g of Li₂Ti₃O₇ (H), 60 g of Li₄Ti₅O₁₂ (F) was used, and instead of 60 g of lithium (nickel/manganese/cobalt) composite oxide (J), 60 g of commercially available lithium-cobalt oxide was used. Further, a laminate pack type nonaqueous electrolyte secondary cell model (8) was produced in the same manner as in Example 1, except that the above prepared anode and cathode were used. Physical properties and evaluation results of the cell model (8) are shown in Tables 1 and 2. It is evident from Tables that the cell model (8) has a remarkably excellent cell service life and load properties.

### EXAMPLE 9

An anode and a cathode were prepared in the same manner as in Example 8, except that instead of 6.1 g of PTFE aqueous dispersion (A) and 0.7 g of amorphous fluoropolymer aqueous dispersion (D), 3.1 g of PTFE aqueous dispersion (B) (corresponding to 1.8 g of PTFE) was used. Further, a laminate pack type nonaqueous electrolyte secondary cell model (9) was produced in the same manner as in Example 8, except that the above prepared anode and cathode were used. Physical properties and evaluation results of the cell model (9) are shown in Tables 1 and 2. When rolling up the electrode, exfoliation was observed between a current collector and an electrode composite. Thereby, the cell could not be charged.

### EXAMPLE 10

An anode and a cathode were prepared in the same manner as in Example 8, except that instead of 6.1 g of PTFE aqueous dispersion (A) and 0.7 g of amorphous fluoropolymer aqueous dispersion (D), 3.7 g of amorphous fluoropolymer aqueous dispersion (D) (corresponding to 1.85 g of amorphous fluoropolymer) was used. Further, a laminate pack type nonaqueous electrolyte secondary cell model (10) was produced in the same manner as in Example 8, except that the above prepared anode and cathode were used. Physical properties and evaluation results of the cell model (10) are shown in Tables 1 and 2. As a result, the cell model (10) has a remarkably excellent cell service life, but its load properties were inferior.

### EXAMPLE 11

An anode and cathode were prepared in the same manner as in Example 8, except that instead of 6.1 g of PTFE aqueous dispersion (A) and 0.7 g of amorphous fluoropolymer aqueous dispersion (D), 5.2 g of amorphous polymer aqueous dispersion (E) containing no fluorine (corresponding to 1.85 g of amorphous polymer containing no fluorine) was used. Further, a laminate pack type nonaqueous electrolyte secondary cell model (10) was produced in the same manner as in Example 8, except that the above prepared anode and cathode were used. Physical properties and evaluation results of the cell model (10) are shown in Tables 1 and 2. When cycle properties of the cell mode (10) were evaluated, slight expansion of the cell was observed. It is considered that the cell expanded due to decomposition gas generated by cathode oxidation decomposition of the nonfluororesin.

Further, the amorphous polymer aqueous dispersion (E) containing no fluorine is a model of SBR (styrene butadiene rubber). SBR is widely employed for conventional carbonaceous anodes. However, in a case where SBR is used for an LTO (lithium-titanium composite oxide) anode having properties obtained by the formation of fine particles as mentioned above, the defection of SBR of the weak supporting force of fine particles is more remarkable, and thereby the degree of the adherence of SBR to a collector is not a level of practical use.

### EXAMPLE 12

A 6 mass% NMP solution of PVdF (polyvinylidene fluoride) was prepared. 93.5 g of Li₄Ti₅O₁₂ (F) and 3.5 g of acetylene block were added in 50 g of the PVdF solution, and the mixture was stirred by a three-one motor provided with disk turbine fins at a rotational rate of 450 rpm for one minute to prepare a paste (anode-P12) for forming an electrode. Further, a paste for forming an electrode (cathode-P12) was obtained in the same manner as in the above formation of the paste for an electrode (anode-P12), except that instead of 93.5 of Li₄Ti₅O₁₂ (F), 93.5 g of the above-mentioned commercially available lithium-cobalt composite oxide was used. An anode and a cathode were prepared in the same manner as in Example 1, except that instead of the paste for forming electrode (anode-P1), the paste for forming an electrode (anode-P12) was used, and instead of the paste for forming an electrode (cathode-P1), the paste for forming an electrode (cathode-P12) was used. Further, a laminate pack type nonaqueous electrolyte secondary cell model (12) was produced in the same manner as in Example 1, except that the above prepared anode and cathode were used. Physical properties and evaluation results of the cell model (12) are shown in Tables 1 and 2. As a result, the cell model (12) has a remarkably excellent cell service life and load properties.

### [Method for measuring adherence between current collector and electrode composite]

The adherence between a current collector and an electrode composite was measured in accordance with JIS K6854-2. An anode was cut into a size of width of 2.5 cm × length of 10 cm, a current collector side was fixed on a sample chuck, and the sample chuck was pasted on a surface of an electrode composite layer with Sellotape (tradename). The sample chuck was pulled toward 180° at a rate of 50 mm/min to measure peeling strength (N/cm). Further, as the electrode for measurement, a model electrode having a film thickness of the anode composite layer of 120 µm was produced by coating one surface of 20 µm aluminum foil with a paste and drying at 120°C for 2 hours, followed by heat treatment at 150°C for 10 minutes and press rolling. Further, the adherence strength is preferably at least 0.15 N/cm. However, even though the adherence strength was at a level of 0.1 N/cm, there were no problem in the step of coating an electrode, the step of drying and the step of rolling. But when rolling up, the anode composite was partially peeled, and the adherence strength was insufficient in order to exhibit stable cell properties.

### [Method for evaluating cell-1 (Evaluation of cell model of Examples 1, 2, 3, 6, 8, 9, 10, 11 and 12)]

A charge and discharge test such that an electric cell is constant-voltage charged at 2.8 V at 25°C for 1 hour and then discharged to 1.5 V at 0.6 A was repeated 100 cycles to obtain a discharge capacity retention per an initial discharge capacity after 100 cycles. The discharge capacity retention is an index which represents the performance of cells to maintain and exhibit initial properties, after the cells are used for a long period, and used as a method for evaluating cell service life. The higher the value of the discharge capacity retention is, the longer the service life span is, and the higher value means an excellent cell. Further, a high rate performance was obtained from the initial discharge capacity and a discharge capacity when an electric cell is discharged to 1.5 V at 3 A after the measurement of the initial discharge capacity.

The high rate performance is an index of an adaptation property of cells to quick discharge or quick charge. The higher the value of the high rate performance is, the more the cell is excellent in the quick charge and discharge cell properties.

Particularly, in cells for automobiles, the quick charge and discharge properties are represented as power and an important index.

### [Method for evaluating cells-2 (Evaluation of cell model of Examples 4, 5 and 7)]

A charge and discharge test such that an electric cell is constant-voltage charged at 4.2 V at 25°C for 1 hour and then discharged to 1.5 V at 0.6 A was repeated 100 cycles to obtain a discharge capacity retention per an initial discharge capacity after 100 cycles, and the cell service life was evaluated. Further, the high rate performance was evaluated based on the difference between the initial discharge capacity and the discharge capacity obtained by discharging the cell of 1.5 V at 3A after the measurement of the initial discharge capacity.

**TABLE 1**

| | | Anode active material | | Binder for anode | | | |
|---|---|---|---|---|---|---|---|
| | | | Lithium intercalation-deintercalation potential V (vs. Li/Li⁺) | PTFE | | Amorphous resin | |
| | | | | | (%) | | (%) |
| Ex.1 | Working Example | Li₂Ti₃O₇ (H) | 1.5 | PTFE(A) | 80 | Fluoro (D) | 20 |
| Ex.2 | Working Example | Li₄Ti₅O₁₂ (G) | 1.5 | PTFE(A) | 80 | Fluoro (D) | 20 |
| Ex.3 | Working Example | Li₄Ti₅O₁₂ (F) | 1.5 | PTFE(A) | 80 | Fluoro (D) | 20 |
| Ex.4 | Comparative Example | Graphite | 0.1 | PTFE(A) | 80 | Fluoro (D) | 20 |
| Ex.5 | Comparative Example | Graphite+ (I) | 0.2 | PTFE(A) | 80 | Fluoro (D) | 20 |
| Ex.6 | Working Example | Li₂Ti₃O₇ (H) | 1.5 | PTFE(B) | 70 | Fluoro (C) | 30 |
| Ex.7 | Comparative Example | Graphite | 0.1 | PTFE(B) | 70 | Fluoro (C) | 30 |
| Ex.8 | Working Example | Li₄Ti₅O₁₂ (F) | 1.5 | PTFE(A) | 80 | Fluoro (D) | 20 |
| Ex.9 | Comparative Example | Li₄Ti₅O₁₂ (F) | 1.5 | PTFE(B) | 100 | | 0 |
| Ex.10 | Comparative Example | Li₄Ti₅O₁₂ (F) | 1.5 | | 0 | Fluoro (D) | 100 |
| Ex.11 | Comparative Example | Li₄Ti₅O₁₂ (F) | 1.5 | | 0 | Non-fluoro (E) | 100 |
| Ex.12 | Comparative Example | Li₄Ti₅O₁₂ (F) | 1.5 | PVdF 100 | | | |

| | | | | | | | |
|---|---|---|---|---|---|---|---|
| Note 1: PTFE (A) is a PTFE aqueous dispersion (A) obtained in "(1) Preparation of PTFE aqueous dispersion (A) containing a fluorosurfactant". Note 2: Nonfluoro (E) is the hydrocarbon type polymer aqueous dispersion (E) obtained in "(5) Preparation of amorphous hydrocarbon type polymer aqueous dispersion (E) containing no fluorosurfactant". | | | | | | | |

**TABLE 2**

| | | Anode exfoliation resistance | Initial discharge capacity | Discharge capacity retention | High rate performance | Outer appearance defection of cell |
|---|---|---|---|---|---|---|
| | | (N/cm) | (mAh) | (%) | (%) | |
| Ex.1 | Working Example | 0.33 | 605 | >99 | 93 | |
| Ex.2 | Working Example | 0.33 | 605 | >99 | 93 | |
| Ex.3 | Working Example | 0.36 | 600 | >99 | 91 | |
| Ex.4 | Comparative Example | 0.45 | 600 | - | 74 | Evaluation stopped due to expansion |
| EX.5 | Comparative Example | 0.33 | 595 | - | 48 | Evaluation stopped due to expansion |
| Ex.6 | Working Example | 0.27 | 605 | >99 | 93 | |
| Ex.7 | Comparative Example | 0.31 | 600 | - | 43 | Evaluation stopped due to expansion |
| Ex.8 | Comparative Example | 0.35 | 605 | >99 | 93 | |
| Ex.9 | Comparative Example | 0.01 | Not be measured since electricity could not be conducted | | | |
| Ex.10 | Comparative Example | 0.11 | 585 | 98 | 76 | |
| Ex.11 | Comparative Example | 0.08 | 585 | - | 26 | Evaluation stopped due to expansion |
| Ex.12 | Comparative Example | 0.10 | 590 | >99 | 75 | |

### INDUSTRIAL APPLICABILITY

The anode composite of the present invention is free from reduction decomposition of a binder for anode, a powder material for constructing the cell can be supported and maintained stably for a long period, and the effect to continuously exhibit excellent cell properties can be obtained. Therefore, the anode composite of the present invention is industrially useful as a material for nonaqueous electrolyte secondary cells represented by lithium ion cells.

The entire disclosure of Japanese Patent Application No. 2008-185944 filed on July 17, 2008 including specification, claims, drawings and summary is incorporated herein by reference in its entirety.

## Claims

1. An anode composite for a nonaqueous electrolyte secondary cell, which comprises an electrode active material having a lithium intercalation-deintercalation potential higher by at least 0.4 V than the standard electrode potential of Li/Li⁺, and a binder containing a fibrillated polytetrafluoroethylene and an amorphous resin.

2. The anode composite for a nonaqueous electrolyte secondary cell according to Claim 1, wherein the electrode active material is a lithium-titanium composite oxide represented by the compositional formula LiₓTi_{y}O₄ (wherein, 0.5≦x≦3, and 1≦y≦2.5).

3. The anode composite for a nonaqueous electrolyte secondary cell according to Claim 1 or 2, which is made of an electrode-forming paste which contains the electrode active material and a binder consisting of an aqueous dispersion of the polytetrafluoroethylene and an aqueous dispersion of the amorphous resin.

4. The anode composite for a nonaqueous electrolyte secondary cell according to Claim 3, wherein the polytetrafluoroethylene is fibrillated by shearing force applied to the electrode-forming paste which contains the electrode active material and the binder and/or by rolling applied to a layer for the anode composite.

5. The anode composite for a nonaqueous electrolyte secondary cell according to Claim 3 or 4, wherein the electrode-forming paste is an aqueous paste containing an aqueous medium as a dispersant.

6. The anode composite for a nonaqueous electrolyte secondary cell according to any one of Claims 1 to 5, wherein the amorphous resin is a fluoropolymer.

7. The anode composite for a nonaqueous electrolyte secondary cell according to any one of Claims 1 to 6, wherein the lithium intercalation-deintercalation potential is higher by at least 1.0 V than the standard electrode potential of Li/Li⁺.

8. The anode composite for a nonaqueous electrolyte secondary cell according to any one of Claims 1 to 7, wherein the mixing ratio of the polytetrafluoroethylene to the amorphous resin is from 1.0:9.0 to 9:0.1.

9. The anode composite for a nonaqueous electrolyte secondary cell according to any one of Claims 1 to 8, wherein the content of the binder is from 0.01 to 15 mass% based on the electrode active material.

10. A nonaqueous electrolyte secondary cell, which has an anode made of the anode composite for a nonaqueous electrolyte secondary cell as defined in any one of Claims 1 to 9.
